# EUROPEAN PATENT APPLICATION

(11) **EP 4 840 728 A1**
(43) Date of publication of application: **18.11.2026**
(21) Application number: 25382499.9
(22) Date of filing: 16.05.2025
(51) Int. Cl.: B62D 25/08, B62D 21/15

(54) **REAR RAIL ASSEMBLY FOR A VEHICLE AND METHODS**

(71) Applicant: AUTOTECH ENGINEERING, S.L., 48340 Bizkaia Amorebieta-Etxano (ES)
(72) Inventor: LOPERA CANO, Vanessa, 92170 Vanves (FR); AGIRRE MENTXAKA, Andoni, 48100 Bizkaia (ES); GIRAUD DU POYET, Quentin, 95240 Cormeilles-en-Parisis (FR)
(74) Representative: Bardehle Pagenberg S.L.

(57) **Abstract**

The present disclosure relates to methods for manufacturing rear rail assemblies for vehicle frameworks. The rear rail assemblies comprise a first rear rail, a second rear rail and at least a first cross-member connecting the first rear rail to the second rear rail. The method comprises providing a first blank and deforming the first blank to form a first unitary rear rail structure, wherein the first unitary rear rail structure comprises the first rear rail and a first portion of the first cross-member. The method further comprises providing a second blank and deforming the second blank to form a second unitary rear rail structure, wherein the second unitary rear rail structure comprises the second rear rail and a second portion of the first cross-member. The method further comprises connecting the first unitary rear rail structure to the second unitary rear rail structure.

## Description

The present disclosure relates to rear rail assemblies for a vehicle, the rear rail assemblies comprising a first and second rear rail and one or more cross-members connecting the rear rails. The present disclosure further relates to methods for manufacturing such rear rail assemblies.

### BACKGROUND

Vehicles such as cars incorporate a structural skeleton designed to withstand the loads that the vehicle may be subjected to during its lifetime. The structural skeleton is further designed to withstand and absorb impacts, in case of e.g. collisions with other cars or road structures.

The demand for weight reduction in the automotive industry has led to the development and implementation of lightweight materials or components, and related manufacturing processes and tools. The demand for weight reduction is especially driven by the goal of a reduction of CO₂ emissions. The growing concern for occupant safety also leads to the adoption of materials which improve the integrity of the vehicle during a crash while also improving the energy absorption.

A process known as Hot Forming Die Quenching (HFDQ) typically uses boron steel sheets to create stamped components with Ultra High Strength Steel (UHSS) properties, with tensile strengths of e.g. 1.500 MPa or 2.000 MPa or even more. The increase in strength allows for a thinner gauge material to be used, which results in weight savings over conventionally cold stamped mild steel components. Throughout the present disclosure UHSS may be regarded as a steel having an ultimate tensile strength of 1.000 MPa or more after a press hardening process.

In a HFDQ process, a blank to be hot formed may be heated to a predetermined temperature e.g. austenization temperature or higher (and particularly between Ac3 and an evaporation temperature of e.g. a coating of the blank). A furnace system may be used for this purpose. Depending on the specific needs, a furnace system may be complemented with additional heaters, e.g. induction heaters or infrared heaters. By heating the blank, the strength of the blank decreases, and deformability increases i.e. to facilitate the hot stamping process.

There are several known Ultra High Strength steels (UHSS) for hot stamping and hardening. The blank may be made e.g. of a boron steel, coated or uncoated, such as Usibor^{®} (22MnB5) commercially available from ArcelorMittal.

Hot Forming Die Quenching may also be called "press hardening" or "hot stamping". These terms will be used interchangeably throughout the present disclosure.

Typical vehicle components that may be manufactured using the HFDQ process include door beams, bumper beams, cross/side members, A/B pillar reinforcements, front and rear rails, seat crossmembers and roof rails.

Hot forming of boron steels is becoming increasingly popular in the automotive industry due to their excellent strength and formability. Many structural components that were traditionally cold formed from mild steel are thus being replaced with hot formed equivalents that offer a significant increase in strength. This allows for reductions in material thickness (and thus weight) while maintaining the same strength. However, hot formed components offer very low levels of ductility and energy absorption in the as-formed condition.

In order to improve the ductility and energy absorption in specific areas of a component, it is known to introduce softer regions within the same component. This improves ductility locally while maintaining the required high strength overall. By locally tailoring the microstructure and mechanical properties of certain structural components such that they comprise regions with very high strength (very hard), i.e. high ultimate tensile strength and high yield strength and regions with increased ductility (softer), i.e. lower ultimate tensile strength and lower yield strength and increased elongation before break, it may be possible to improve their overall energy absorption and maintain their structural integrity during a crash situation and also reduce their overall weight. Such soft zones may also advantageously change the kinematic behavior in case of a collapse of a component under an impact.

Known methods of creating regions with increased ductility ("softzones" or "soft zones") in structural components of vehicles include the provision of tools comprising a pair of complementary upper and lower die units, each of the units having separate die elements (steel blocks). A blank to be hot formed is previously heated to a predetermined temperature e.g. austenization temperature or higher by, for example, a furnace system so as to reduce the strength i.e. to facilitate the hot stamping process.

The die elements may be designed to work at different temperatures, in order to have different cooling rates in different zones of the part being formed during the quenching process, and thereby resulting in different material properties in the final product e.g. soft areas which will generally have a lower ultimate tensile strength and a lower yield strength but allow for more elongation before breaking. E.g. one die element may be cooled in order to quench the corresponding area of the component being manufactured at high cooling rates and to thereby reduce the temperature of the component rapidly and obtain a hard martensitic microstructure. Another neighboring die element may be heated in order to ensure that the corresponding portion of the component being manufactured cools down at a lower cooling rate, in order to obtain a softer microstructure, including e.g. bainite, ferrite and/or perlite. Such an area of the component may remain at higher temperatures than the rest of the component when it leaves the die.

Several methods of differential heating prior to stamping are known. In an example, a nozzle or set of nozzles may discharge a fluid stream, e.g. compressed cooling air, towards a portion of the blank to be cooled e.g. while the bank is still in a furnace system. Other parts of the blank may be maintained at a higher temperature. This makes it possible to obtain a blank with a tailored temperature profile along its length and/or width. A tailored temperature profile along the blank can lead to a tailored profile of mechanical properties along the resulting component. In some examples, the blank may undergo further heating in the oven before being subjected to the stamping process.

Other methods for obtaining hot stamped components with areas of different mechanical properties include e.g. tailored or differentiated heating prior to stamping, and local heat treatments after a stamping process to change the local microstructure and obtain different mechanical properties. Yet further possibilities include the use of patchwork blanks, and Tailor Welded Blanks (TWB) combining different thicknesses and/or materials in blanks.

In other examples, an array of infrared heaters may be used which may be independently controlled to control temperatures along a blank.

Some elements of the structural skeleton of a car e.g. pillars (A-pillar, B-pillar, C-pillar), unitary door ring, a rocker, a floor, and a weave rocker among others, may have one or more regions with a substantially U-shaped (also known as "hat"-shaped) cross-section. These structural components may be manufactured in a variety of ways and may be made of a variety of materials. Lightweight materials that improve the energy absorption during a crash while also keeping the integrity of the vehicle are desired.

Throughout the present disclosure, a U-shaped cross-section may be understood as relating to a structural member which in a cross-section (generally in a transverse plane which is substantially perpendicular to a longitudinal axis of the structural member) has a bottom wall and two side walls. The U-shaped cross-section is generally known for having a good ratio of moment of inertia to weight. The two side walls may form an obtuse angle with the bottom wall, e.g. between 90° and 135°. The two side walls may include outwardly extending side flanges. The bottom wall and side walls may be substantially straight, but they may also include transitions, curved portions, recesses or protrusions.

In addition to the Ultra High Strength Steels mentioned before, more ductile steels may be used in parts of the structural skeleton requiring energy absorption. Examples of ductile steels include Ductibor^{®} 500, Ductibor ^{®} 1000 and CRL-340LA.

UHSS may exhibit tensile strengths as high as 1.500 MPa, or even 2.000 MPa or more, particularly after a press hardening operation. Once hardened, a UHSS may have a martensitic microstructure. This microstructure enables an increased maximum tensile and yield strength per weight unit.

Some ductile steels may also be heated and pressed (i.e. used in a hot stamping process) but will not have a martensitic microstructure after the process. As a result, they will have lower tensile and yield strength than UHSS, but they will have a higher elongation at break.

Although ductile steel enables energy absorption by a structural component, controlling and predicting how the structural component may behave during a vehicle crash may not be easy. Moreover, the overall weight of the vehicle framework is preferably as low as possible to reduce fuel or battery consumption. Also, enhancing energy absorption while maintaining a certain structural integrity of the structural component is not straightforward.

The underbody of vehicles comprises a rear part of the vehicle framework which extends from the rear seats towards the rear bumper of the vehicle. The rear part of the framework typically comprises two longitudinal rear rails and one or more cross-members connecting the rear rails and it is generally formed from multiple independent components. These individual components may be obtained by hot stamping. The individual components are then joined together forming a stiff structure capable of protecting the vehicle cabin and the fuel tank or the battery in the case of a crash event. Joining (typically welding) multiple components together after forming additional complicated processes, and thus time and cost to the manufacture of the rear part of the vehicle framework. The multiple welding operations can also add heat affected zones in the resulting framework. Depending on the size and location of such heat affected zones, the mechanical strength and stiffness and kinematic behavior in the case of an impact can be affected as well.

Document WO2024/074659 A1 discloses a unitary rear rail structure for a vehicle formed by deforming a single combined blank. The unitary rear rail structures comprise a first rear rail, a second rear rail and one or more cross-members connecting the first rear rail to the second rear rail. The unitary rear rail structure is formed by deforming a single combined blank. The single combined blank comprises at least a first blank joined to a second blank such that the first blank partially overlaps the second blank to form one or more overlapping regions.

Joining the blanks to form a combined blank prior to deforming avoids many cumbersome welding processes after forming and can avoid or reduce heat affected zones. However, due to the size of the component, the achievable shapes in the forming process are limited. Therefore, a resulting unitary rear rail structure in some cases occupies more space than desired.

The present disclosure aims at avoiding or at least reducing one or more of the aforementioned drawbacks.

### SUMMARY

In a first aspect, a method for manufacturing a rear rail assembly for a vehicle framework is provided. The rear rail assembly comprises a first rear rail, a second rear rail and at least a first cross-member connecting the first rear rail to the second rear rail. The method comprises providing a first blank and deforming the first blank to form a first unitary rear rail structure, wherein the first unitary rear rail structure comprises the first rear rail and a first portion of the first cross-member. The method further comprises providing a second blank and deforming the second blank to form a second unitary rear rail structure, wherein the second unitary rear rail structure comprises the second rear rail and a second portion of the first cross-member. The method further comprises connecting the first unitary rear rail structure to the second unitary rear rail structure.

In accordance with this aspect, a rear rail assembly comprising two unitary rear rails comprising part of a cross-member is provided. Joining operations at the transition area between a rear rail and a cross-member may be avoided, as the unitary rear rail structures already comprise part of the cross-member i.e. they comprise an integrated corner which may later on form part of a cross-member of the assembly. The transition area may comprise no or less heat affected zones, as welding operations after forming are reduced and crash performance of the rear rail assembly may therefore be improved. The rear rail assembly may therefore have sufficient strength, stiffness, and energy absorption to provide protection to the passengers of the vehicle in case of an impact, e.g., a rear impact.

Most part of the rear rail assembly is formed by deforming two blanks, reducing manufacturing time and associated costs. The two unitary rear rail structures may potentially be deformed in a same stroke. The rear rail assembly may comprise a simpler manufacturing process, as the number of structures forming the assembly may be substantially reduced as compared with other prior art assemblies. In addition, the size of the unitary rear rail structures may be relatively manageable, allowing the rear rail assembly to be assembled in assembly lines which are configured for completing rear rail assemblies comprising more components.

Also, complexity related to press hardening tools which deform very large blanks may be avoided. Logistics may also be improved when compared to transport of one-piece rear rail structures comprising both of the rear rails. In addition, the rear rail assembly may be more flexible than bigger unitary structures in terms of adapting their shape to particular requirements. As the size of the unitary rear rail structures may be relatively manageable, the structures comprising the rear rails may be easily rotated, such that the walls forming the rear rails can be shaped in subsequent forming steps to achieve different specifications relative to particular frameworks e.g. negative draft angles which may facilitate the installation of the rear wheels of the vehicle.

Throughout the present disclosure, a portion of a component may be regarded as only a part of the component. Accordingly, a portion of the first cross-member may be understood as only a part of the first cross-member of the rear rail assembly. The component as a whole is therefore defined by several portions of the component joined together.

Throughout the present disclosure, references to the "mechanical properties of a portion" may be understood as the mechanical properties of the material forming said portion. Therefore, unless otherwise stated, comparisons of mechanical properties of portions, components, or others, are directed to the material and not to the geometry, or other particularities, of the same.

Higher mechanical properties may herein be understood as a higher ultimate tensile strength and/or a higher yield strength, whereas lower mechanical properties may be understood as a lower ultimate tensile strength and/or a lower yield strength. Ultimate tensile strength and yield strength are herein regarded as material properties of the material after the manufacturing process. Ultimate tensile strength and yield strength may be determined in standardized tensile strength tests, using e.g. A30, A50 or A80 specimens in a quasi-static load test.

The comparison between lower and higher mechanical properties should be made using the same test conditions and specimen size. To compare yield strengths of different portions, specimens formed with the same materials as the portions of the main soft zone may be prepared and tested in a Universal Testing Machine (UTM).

Throughout the present disclosure, a longitudinal direction is defined for providing spatial orientation of components of a vehicle. The rear rails may have a length along the longitudinal direction of the vehicle, which would be generally parallel to a driving direction of the vehicle in which the assembly is mounted. The cross members may extend along the width of the vehicle i.e. along a lateral direction of the vehicle which is substantially perpendicular to the longitudinal direction.

In some examples, the first and second unitary rear rail structures may be made by hot stamping the first and/or second blanks. Further if desired, when applying hot stamping, different regions of the structure may be subjected to different temperature treatments, resulting in regions with different mechanical properties.

In some examples, connecting the first and second unitary rear rail structures may comprise joining a third cross-member portion to the first and second portions of the first cross-member. In some examples, the third cross-member portion may be welded to the first and second cross-member portions. In other examples, connecting the first and second unitary rear rail structures may comprise directly joining the first and second portions of the first cross-member.

In some examples, the rear rail assembly may further comprise a second cross-member connecting the first rear rail to the second rear rail. In these examples, the method may comprise connecting the first and second unitary rear rail structure with a fourth cross-member portion to form at least part of the second cross-member. In these examples, the first unitary rear rail structure may comprise a first portion of the second cross-member and the second unitary rear rail structure may comprise a second portion of the second cross-member. The first and second portions of the second cross-member may be connected to each other forming the second cross-member.

In other examples, the method may comprise joining the fourth cross-member portion to one or more brackets and joining the brackets to the rear rails of the first and second unitary rear rail structure. Brackets may be used to connect the rear rails with an additional cross-member portion in areas of the rear rails which are not formed such that they comprise a cross-member portion i.e. in areas of the rear rails which do not comprise any corner of the cross-member.

In some examples, providing the first blank may comprise providing a plurality of first sub-blanks, and joining the first sub-blanks to form the first blank and providing the second blank may comprise providing a plurality of second sub-blanks and joining the second sub-blanks to form the second blank. The plurality of sub-blanks may be made from different materials which may comprise different mechanical properties and/or have different thickness. The properties may be tailored in accordance with local requirements, optimizing strength and weight.

In some examples, joining the first sub-blanks to form the first blank may comprise partially overlapping the first sub-blank forming one or more overlapping regions. Energy absorption during a crash event may be improved by the formed overlapping regions. An overlapping region may be formed e.g. in a junction between a rear rail and a cross-member, improving the mechanical properties of the transition area between the rear rail and the cross-member.

In some examples, at least one of the rails and the cross-members of the rear rail assembly has a substantially U-shaped cross-section. The U-shaped cross-section comprises a bottom wall, a first side wall, a second side wall, a first lateral flange projecting outwardly at an end of the first side wall and a second lateral flange projecting outwardly at an end of second side wall. The U-shaped cross-section increases the moment of inertia of the regions where it is formed and improves the resistance of the member against impacts, specifically impacts at an angle relative to a longitudinal direction of the member.

### BRIEF DESCRIPTION OF THE DRAWINGS

Non-limiting examples of the present disclosure will be described in the following, with reference to the appended figures, in which:
Figure 1 schematically illustrates a rear rail assembly for a vehicle framework according to an example of the present disclosure.
Figure 2A shows a plurality of blanks before being deformed and connected to form a rear rail assembly according to an example of the present disclosure.
Figure 2B shows an exploded perspective view of a rear rail assembly for a vehicle framework according to an example of the present disclosure.
Figure 2C shows an exploded perspective view of a rear rail assembly according to another example of the present disclosure.
Figure 3 shows an exploded perspective view of a rear rail assembly according to yet a further example of the present disclosure.
Figure 4 shows a flow chart of a method for manufacturing a rear rail assembly for a vehicle framework.

The figures refer to example implementations and are only be used as an aid for understanding the claimed subject matter, not for limiting it in any sense.

### DETAILED DESCRIPTION OF EXAMPLES

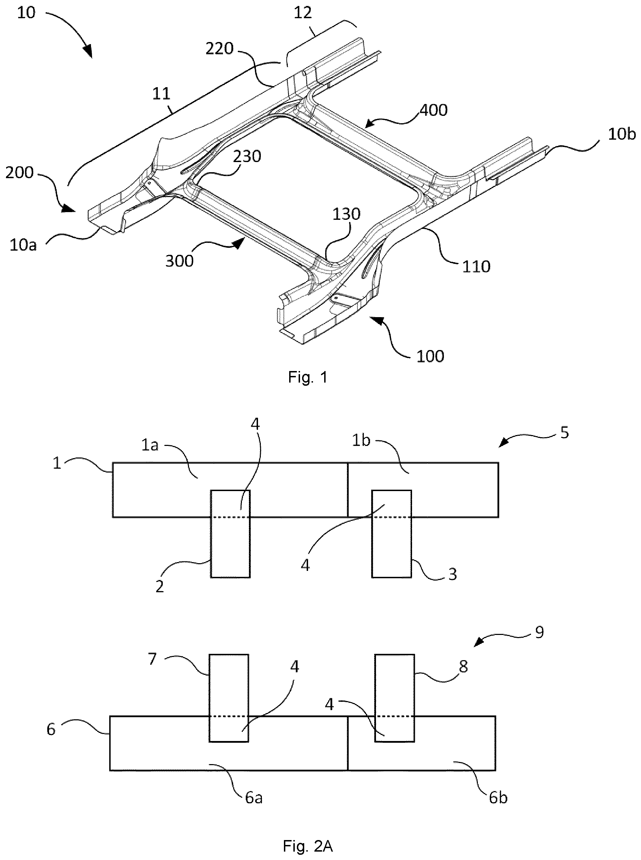

Figure 1 schematically illustrates a rear rail assembly 10 for a vehicle framework according to an example of the present disclosure. The rear rail assembly 10 comprises a first rear rail 110, a second rear rail 220 and at least a first cross-member 300 connecting the first rear rail 110 to the second rear rail 220. In this particular example, the rear rail assembly 10 comprises a second cross-member 400.

The rear rail assembly 10 extends from a first end 10a to a rear end 10b in a longitudinal direction, and comprises a front region 11, configured for attaching the rear rail assembly 10 to a chassis, and a rear region 12.

The rear rail assembly 10 comprises a first unitary rear rail structure 100 and a second unitary rear rail structure 200 connected to each other. The first unitary rear rail structure 100 is formed by deforming a first blank and comprises the first rear rail 110 and at least a first portion 130 of the first cross-member of the rear rail assembly.

The rear rail assembly 10 further comprises a second unitary rear rail structure 200 formed by deforming a second blank and comprises the second rear rail 220 and at least a second portion of the first cross-member 230.

The first unitary rear rail structure 100 is connected to the second unitary rear rail structure 200 forming the rear rail assembly 10. In particular, the first and second portions 130, 230 of the first cross-member are connected to each other forming the first cross-member of the rear rail assembly, and therefore, forming the rear rail assembly 10.

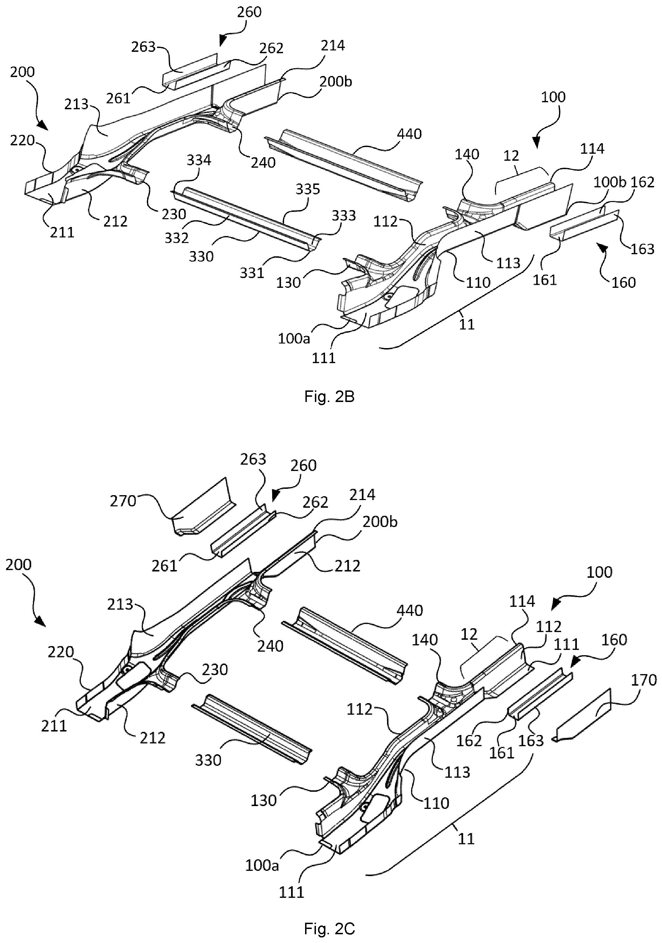

The first rear rail 110 and the second rear rail 220 may comprise a substantially U-shaped cross-section along at least a portion of the first and second rear rails. The first cross-member 300 may also comprise a substantially U-shaped cross-section. The U-shaped cross-section may be understood as a cross-section comprising a first side wall, a second side wall and a bottom wall connecting the sidewalls. A U-shaped cross-section improves the resistance of the member against impacts, specifically bending loads. Further details on the U-shaped cross-section of the rear rails will be described in relation to figure 2B.

In the example illustrated in figure 1, the rear rail assembly 10 comprises two cross-members 300, 400, but other numbers of cross-members may be used in other examples. For example, the rear rail assembly 10 may comprise only one cross-member, or three or more cross-members. Additionally, the cross-members 300, 400 may be distributed in a different manner, e.g. the separation between cross-members 300, 400 may be increased or reduced depending on the specifications of the rear rail assembly 10.

The first unitary rear rail structure 100 of the rear rail assembly 10 may be made from a plurality of first sub-blanks 1, 2, 3 joined together to form a first blank 5. The first unitary rear rail structure 100 may be obtained after deforming the first blank 5. Further, the second unitary rear rail structure 200 may be made from a plurality of second sub-blanks 6, 7, 8 joined together to form a second blank 9. The second unitary rear rail structure 200 may be obtained after deforming the second blank 9.

Figure 2A shows the first and second plurality of sub-blanks 1, 2, 3, 6, 7, 8 before being deformed and connected to form a rear rail assembly 10 according to the present disclosure.

In particular, figure 2A shows a plurality of first sub-blanks 1, 2, 3 joined together to form the first blank 5. The plurality of first sub-blanks 1, 2, 3 which form the first blank 5 may comprise a first rear rail blank 1 joined to a first cross-member blank 2 and to a second cross-member blank 3. The first cross-member blank 2 may be joined substantially perpendicular to the first rear rail blank 1 and may be joined to a front region of the first rear rail blank 1. The second cross-member blank 3 may be joined substantially perpendicular to the first rear rail blank 1 and may be joined to a rear region of the first rear rail blank 1.

Figure 2A further shows a plurality of second sub-blanks 6, 7, 8 joined together to form the second blank 9. The plurality of second sub-blanks 6, 7, 8 which form the second blank 9 may comprise a second rear rail blank 6 joined to a third cross-member blank 7 and to a fourth cross-member blank 8. The third cross-member blank 7 may be joined substantially perpendicular to the second rear rail blank 6 and may be joined to a front region of the second rear rail blank 6. The fourth cross-member blank 8 may be joined substantially perpendicular to the second rear rail blank 6 and may be joined to a rear region of the second rear rail blank 6.

In some examples, joining the blanks to form the first and/or second blanks 5, 9 may comprise welding the sub-blanks together e.g. through laser welding or spot welding.

In some examples, joining the first sub-blanks to form the first blank and/or joining the second sub-blanks to form the second blank may comprise partially overlapping the first sub-blanks. The sub-blanks may be joined with each other forming one or more overlapping regions formed by partially overlapping the sub-blanks with each other i.e. one sub-blank may only be partially positioned over another sub-blank and the sub-blanks are then joined to each other. An overlapping region thus acquires an increased thickness as compared to the remainder of the blanks. Such an increase in thickness can be used to tailor mechanical properties as needed and provide local reinforcements, e.g. in areas where increased strength and/or stiffness are required.

In some examples, an overlapping region 4 may be formed in a junction between a rear rail and a cross-member. This results in a connection between the rear rail and the cross-member with improved mechanical properties and enhances the overall kinematic behavior of the assembly. Thus, the transition between a rear rail and a cross-member may be designed to have higher mechanical properties than other regions of the rear rail assembly.

Welding the blanks by laser welding may comprise partially overlapping the blanks with each other and forming a variety of weld seams along the perimeter of the overlapping regions of the blanks. The weld seams may have different shapes. The weld seams may be substantially C-shaped or substantially G-shaped, as described e.g. in pending application EP 24382220.2 from the same applicant. In other examples, the weld seams may define zigzag shapes or weld stitches along edges of the overlapping region, which may be formed using continuous laser welding. In yet further examples, arc welding may be used.

In other examples, the blank might be formed by edge-to-edge welding of sub-blanks (like a Tailor Welded Blank), or the blank might be formed both by using overlapping sub-blanks in specific regions, and using edge-to-edge welding in other regions.

Welding, and specifically edge-to-edge welding may involve the ablation or other removal of a part of a coating of the blanks if the blanks are coated. AlSi coatings and Zn coatings are well known in the art. In further examples, a filler material may be used to dilute the coating in the weld zone. The filler material may be a filler wire, and in specific examples, multiple laser beams may be used to melt the blanks and the filler wire.

In some examples, a patch blank (not shown) may be added as a reinforcement in order to increase strength of a specific area of the blank. One of the first sub-blanks may be a first patch blank completely overlapping with one of the other first sub-blanks. A patch blank may be added in areas of the first and/or second unitary rear rail structures where additional strength may be needed, that is, where high loads may be expected.

In further examples, the plurality of sub-blanks may be formed by a plurality of blanks or sub-blanks, e.g. of different thicknesses and/or different materials. In these examples, the plurality of blanks forming the rear rail blanks and/or the front and rear cross member blanks may be Tailor Welded Blanks (TWB). The TWB may be formed by joining the sub-blanks by edge-to-edge welding, wherein welding may comprise laser welding. In other examples, the plurality of blanks forming the rear rail blanks 1, 6 and/or the front and rear cross member blanks 2, 3, 7, 8 may be joined by forming one or more overlapping regions formed by partially overlapping the blanks to each other. In these cases, any of laser welding, arc welding or spot welding may be used.

Accordingly, in the example illustrated in figure 2A, the first rear rail blank 1 is formed by a front first rear rail blank 1a and a rear first rear rail blank 1b. In addition, the second rear rail blank 6 is formed by a front second rear rail blank 6a and a rear second rear rail blank 6b. The front first and second rear rail blanks 1a, 6a may be made of a different material from the rear first and second rear rail blanks 1b, 6b. In other examples, the first rear rail blank 1 is made of a single blank, and the same for the second rear rail blank 6.

In some examples, the plurality of sub-blanks that form the first and second blanks 5, 9 may be made from different materials. In some examples, the sub-blanks 1, 2, 3, 6, 7, 8 may be made from ultra-high strength steels (UHSS). Boron steel, e.g. 22MnB5, or other steel compositions mentioned or referred to before may be suitable UHSS. These sub-blanks, e.g. boron steel blanks, may comprise an aluminum silicon coating or zinc coating.

In some examples, the rear rail assembly 10 may be made of a boron steel like Usibor^{®}, e.g. Usibor^{®} 1500 (or any 22MnB5 steel with or without protective coating), Usibor^{®} 2000 (or any 37MnB5 steel) or any martensitic steel or ultra-high strength steel (UHSS). Usibor^{®} is commercially available from ArcelorMittal.

Usibor^{®} 1500 is supplied in ferritic-perlitic phase. It is a fine grain structure distributed in a homogenous pattern. Its mechanical properties are related to this structure. After heating, a hot stamping process and subsequent quenching, a martensite microstructure is created. As a result, tensile strength and yield strength increase noticeably.

The composition of Usibor^{®} 1500 is summarized below in weight percentages (the rest is iron (Fe) and impurities):
Maximum carbon (C) (%) : 0.25
Maximum silicon (Si) (%) : 0.4
Maximum manganese (Mn) (%): 1.4
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.01
Maximum copper (Cu) (%): 0.20
Maximum boron (B) (%): 0.005
Maximum chromium (Cr) (%): 0.35

Usibor^{®} 2000 is another boron steel with even higher strength. After a hot stamping die quenching process, the yield strength of Usibor^{®} 2000 may be 1.300 MPa or more, and its ultimate tensile strength may be above 1.800 MPa.

The composition of Usibor^{®} 2000 is summarized below in weight percentages (rest is iron (Fe) and impurities):
Maximum carbon (C) (%): 0.36
Maximum silicon (Si) (%): 0.8
Maximum manganese (Mn) (%): 0.8
Maximum phosphorus (P) (%): 0.03
Maximum sulphur (S) (%): 0.01
Aluminium (Al) (%): 0.01 - 0.06
Maximum titanium (Ti) (%): 0.07
Maximum niobium (Nb) (%): 0.07
Maximum copper (Cu) (%): 0.20
Maximum boron (B) (%): 0.005
Maximum chromium (Cr) (%): 0.50
Maximum molybdenum (Mb) (%): 0.50

22MnB5 may be presented with an aluminum-silicon coating in order to avoid decarburization and scale formation during the forming process.

Several 22MnB5 steels are commercially available having a similar chemical composition. However, the exact amount of each of the components in a 22MnB5 steel may vary slightly from one manufacturer to another. Other ultra-high strength steels include e.g. BTR 165, commercially available from Benteler.

MBW- K^{®} 1900 is a manganese-boron steel 34MnB4 from ThyssenKrupp^{™} and suitable for hot stamping and the methods disclosed herein and which may have an ultimate tensile strength after stamping of 1.900 MPa. The chemical composition of MBW-K^{®} 1900 is summarised below in weight in percentages:
Maximum carbon (C) (%): 0.38
Maximum silicon (Si) (%): 0.40
Maximum manganese (Mn) (%): 1.40
Maximum phosphorus (P) (%): 0.025
Maximum sulphur (S) (%): 0.010
Minimum aluminium (Al) (%): 0.015
Maximum chromium and molybdenum (Cr + Mo) (%): 0.50
Maximum titanium (Ti) (%): 0.05
Maximum boron (B) (%): 0.005

MBW^{®} 1900 is another manganese-boron steel from ThyssenKrupp^{™} and it may have an ultimate tensile strength of 1.900 MPa after hot stamping. It is commercially available with aluminium-silicon coatings and suitable for hot stamping and the methods disclosed herein. The chemical composition of MBW^{®} 1900 is summarized below in weight in percentages:
Maximum carbon (C) (%): 0.38
Maximum silicon (Si) (%): 0.40
Maximum manganese (Mn) (%): 1.40
Maximum phosphorous (P) (%): 0.025
Maximum sulphur (S) (%): 0.010
Minimum aluminium (Al) (%): 0.1
Maximum niobium (Nb) (%): 0.05
Maximum titanium (Ti) (%): 0.05
Maximum chromium and molybdenum (Cr + Mo) (%): 0.50
Maximum boron (B) (%): 0.005

B1800HS is a boron steel which may have an ultimate tensile strength of about 1.800 MPa and suitable for hot stamping and the methods disclosed herein. The chemical composition of B1800HS is summarized below in weight in percentages:
Carbon (C) (%): 0.28 - 0.35
Maximum silicon (Si) (%): 0.5
Manganese (Mn) (%): 1.0 - 1.8
Maximum phosphorous (P) (%): 0.025
Maximum sulphur (S) (%): 0.010
Aluminium (Al) (%): 0.01 - 0.06
Maximum titanium (Ti) (%): 0.05
Maximum boron (B) (%): 0.0050
Maximum chromium and molybdenum and niobium (Cr + Mo + Nb) (%): 0.80

The plurality of sub-blanks that form the first and second blanks 5, 9 may comprise different material and/or thicknesses. For example, sub-blanks of Usibor^{®} (e.g. Usibor^{®} 1500 and/or Usibor^{®} 2000) may be used in the blanks. Using these types of materials in hot forming and subsequent quenching processes leads to a predominantly martensitic structure due to the Usibor^{®}. One or more of the sub-blanks may be made from a different material, e.g. Ductibor^{®} 1000. In further examples, sub-blanks may be made of the same material, e.g. boron steel or aluminium, but their thickness may be varied.

Ductibor^{®} 1000 is another material used in hot stamping for increasing the elongation when compared to Usibor^{®} 1500 and Usibor^{®} 2000. The yield strength of Ductibor^{®} 1000 may be 800 MPa or more, and the ultimate tensile strength of 1.000 MPa or more. The composition of Ductibor^{®} 1000 is summarized below in weight percentages (rest is iron (Fe) and impurities):
Maximum carbon (C) (%): 0.10
Maximum silicon (Si) (%): 0.6
Maximum manganese (Mn) (%): 1.8
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.10
Maximum copper (Cu) (%): 0.20
Maximum boron (B) (%): 0.005
Maximum chromium (Cr) (%): 0.20

In some examples, the blanks may comprise aluminium. The aluminium of the blank may be an aluminium alloy selected from the groups 6000 and 7000 series aluminium alloys. These series are characterized by their strength, corrosion resistance and weldability.

In examples, the components forming the rear rail assembly 10 may comprise members made of different materials. For example, the first and second rear rails 110, 220 of the rear rail assembly may be made of UHSS, e.g. 22MnB5 or another boron steel, in one region and a more ductile steel in another region.

Also, the types of UHSS may be varied depending on the requirements, e.g. 22MnB5 or Usibor^{®} 1500 may be used for the stiffer regions of the rear rails, and the first and second portion of the first cross-member 130, 230 could be made of e.g. 37MnB5 or Usibor^{®} 2000. Other materials may be chosen to form the rear rail assembly 10 depending on the desired dynamic response and mechanical properties. Additionally, a given member may have regions made of different materials. For example, the first and second rear rails 110, 220 may have a front region 1a, 6a made of Usibor^{®} 1500 and a rear region 1b, 6b made of Ductibor^{®} 1000.

In this illustrated example, the first and second rear rails 110, 220 may comprise a front region 11 configured for attaching the rear rail assembly 10 to a chassis. The stiffness and strength required in the region joined to the chassis may be higher. The front region 11 may be made of a suitable UHSS, like 22MnB5 or similar and may have an ultimate tensile strength after hot stamping above 1.500 MPa or more, and more specifically 1.800 MPa or more.

Further, the first and second rear rails 110, 220 may also comprise a rear region 12 having an ultimate tensile strength after hot stamping between 700 - 1.200 MPa, and a yield strength after hot stamping between 500 - 900 MPa. These rear regions 12 may be configured to absorb energy and deform during an impact. These rear regions 12 may be made of Ductibor^{®} or another suitable steel that is more ductile than the steel for the first region. In some examples, the ultimate tensile strength after hot stamping may be 450 - 500 MPa.

In some examples, the transition between the front and rear regions 11, 12 may comprise an overlapping region. In other examples, the front regions 11 and the remainder of the rear rails 12 may be formed as Tailor Welded Blanks, i.e. the individual blanks may be welded to each other in an edge-to-edge welding process ("butt joint").

Further, different regions of the rear rail assembly 10 may be made using blanks of the same (base) material, but with a different local microstructure. For example, the front and rear regions 11, 12 of the first and second rear rails may be made with a material, with substantially the same composition but with different local microstructures. This may be obtained by applying different thermal treatment, before, during or after the stamping process. E.g. local heat treatments using induction heating or laser after a stamping process may result in regions 11,12, with different mechanical properties.

In the example illustrated in figure 1, the front region 11 of the rear rails 110, 220 may have a martensitic microstructure, and the rear region 12 of the rails may have a microstructure including bainite, ferrite and/or perlite.

In some of these examples, the areas with different ultimate tensile strength may have a different microstructure.

Different microstructures may be created in hot formed first and/or second unitary rear rail structures. These different microstructures may be created by heating the blanks 5, 9 above the austenitization temperature and then controlling the cooling of the blanks 5, 9 during shaping the blanks 5, 9 to form the components of a rear rail assembly 10 of a vehicle framework. The cooling of different areas of the blanks 5, 9 may be controlled by providing zones of the forming tool with heaters. Accordingly, the rear rail assembly 10 comprises zones with a predominantly martensitic structure and zones comprising ferrite, perlite or bainite or a mixed of thereof. Alternatively, a different microstructure, may be created by partially heating, e.g. using a laser beam, a portion of the unitary rear rail structures which has been press-hardened to change the predominantly martensitic structure to a structure containing ferrite and/or perlite and/or bainite and/or tempered martensite and a mixed of thereof. The tensile strength of the predominantly martensitic structure may be above 1.400 MPa, and specifically above 1.500 MPa.

The rear rail assembly 10 may thus be made from a material which may be effective for absorbing energy during an impact.

Figure 2B shows an exploded view of a rear rail assembly 10 for a vehicle framework according to an example of the present disclosure. In particular, figure 2B shows a perspective view of a rear rail assembly 10 comprising the first unitary rear rail structure 100 and the second unitary rear rail structure 200 obtained after deforming the first and second blanks 5, 9 shown in figure 2A.

The first unitary rear rail structure 100 is formed by deforming a first blank 5 and comprises the first rear rail 110 and at least a first portion 130 of the first cross-member. A first unitary rear rail structure comprising the first rear rail 110 of the assembly 10 and part of the first cross-member 300 may be obtained i.e. the first unitary rear rail structure may comprise only a portion of the first cross-member. Joining operations at the transition area between a rear rail and a cross-member may be avoided, improving crash performance.

Further, in the example shown in figure 2B, the first unitary rear rail structure 100 further comprises a first portion 140 of a second cross-member.

The first portions of the cross-members may refer to a component defining less than a 100% of the component as a whole. In some examples, a portion of the cross-member may be a 50% of the cross-member. In some examples, a portion of the cross-member may be less than a 50% of the cross-member. In yet further examples, a portion of the cross-member may be less than a 30 % of the cross-member. Accordingly, the first unitary rear rail structure 100 may be a one-piece structure which may comprise the rear rails with partially integrated cross-members.

A rear rail structure with a simplified manufacturing process may be provided, as the first portion of the first cross-members is joined to the first rear rail before the deformation process. The first unitary rear rail structure may be relatively lightweight and may comprise less heat affected zones, as welding operations after forming are substantially reduced. The first and second unitary rear rail structures may comprise sufficient strength, stiffness, and energy absorption to provide protection to the passengers of the vehicle in the case of an impact, especially in case of a rear impact. Further, manoeuvrability of the first and second rear rail structures may be enhanced as compared to rear rail structures made of larger components, allowing to shape the rear rails in complex shapes e.g. enabling the obtention of unitary rear rail structures with draft angles in the rear rails. The rear rail assembly may be assembled in less time.

The first rear rail 110 may extend from a front end 100a to a rear end 100b and may comprise a substantially U-shaped cross-section along at least a portion of the first rear rail. The U-shaped cross-section may include a first bottom wall 111 connecting a first inner wall 112 and a first outer wall 113. The first inner wall 112 may further include an inwardly extending flange 114 and the first outer wall 113 may further include an outwardly extending flange (not shown). In some examples the outer wall 113 may extend from a front end 100a, 200a of the rear rail to a rear end 100b, 200b of the rear rail.

In some examples, the first outer wall 113 may have a small or even negative draft angle with respect to the first bottom wall 111 of the first rear rail. The rear rails may comprise particular shapes which may adapt to different components of the vehicle. Smaller or negative draft angles may be needed in the outer walls of the rear rails in order to adapt to other components of the vehicle e.g. the wheels.

As shown in the example of figure 2B, the first rear rail 110 may comprise a front region 11 comprising the substantially U-shaped cross-section and the first rear rail 110 may comprise a rear region 12 comprising the substantially U-shaped cross-section. In some examples, the height of the walls defining the U-shaped cross-section may vary along the length of the rear rail e.g. the outer wall of the rear rails may be higher in a rear region of the rear rail than in a front region of the rear rail.

In some examples, the first and/or second unitary rear rail structures 100, 200 may comprise a front region 11 and a rear region 12, and the front region 11 may have a higher ultimate tensile strength than the rear region 12.

As discussed with reference to figure 2A, the rear region 12 of the rear rail may comprise mechanical properties which may be different from the mechanical properties of the front region 11 of the rear rail. In particular, the rear region 12 may be made of a material comprising less ultimate tensile strength than the material of the front region 11. The rear region 12 may thus be configured to absorb energy and deform during an impact.

Further, the second unitary rear rail structure 200 extends from a front end 200a to a rear end 200b and may comprise a substantially U-shaped cross-section along at least a portion of the second rear rail 220. The U-shaped cross-section may include a first bottom wall 211 connecting a first inner wall 212 and a first outer wall 213. The first inner wall 212 may further include an inwardly extending flange 214 (inwardly herein means towards a center of the vehicle) and the first outer wall 213 may further include an outwardly extending flange (not shown).

In some examples, the second unitary rear rail structure 200 may substantially mirror a shape and size of the first unitary rear rail structure 100.

In the rear rail assembly 10 of the present disclosure, the first and second portions 130, 230 of the first cross-member are connected to each other forming the first cross-member 300. The portions may be connected such that a cross-member as a whole may be obtained i.e. such that a cross-member extending from the first rear rail to the second rear rail may be obtained.

In some examples (not shown), the first and second portions 130, 230 may be joined to each other, forming the first cross-member 300by directly joining the first and second portions 130, 230 of the first cross-member. In other examples, the first and second portions may be connected by one or more additional cross-member portions arranged between the first and second portions 130, 230.

Figure 2B shows a third cross-member portion 330 and a fourth cross-member portion 440.

In some examples, a third cross-member portion 330 may connect the first portion of the first cross-member 130 to the second portion of the first cross-member 230. In the example shown in figure 2B, the third cross-member portion 330 may be welded to the first and second cross-member portions 130, 230. In other examples, the cross-member portions may be mechanically attached to each other.

In other examples (not shown), the first and second portion 130, 230 of the first cross-member may be connected by the third cross-member portion 330 and by one or more additional cross-member portions.

The rear rail assembly may be manufactured in different pieces which may then be assembled together. Depending on the specifications of each vehicle, cross-members with different mechanical properties may be used for the same unitary rear rail structures.

In some examples the third cross-member portion 330 may be made by cold forming. In other examples, the third cross-member portion 330 may be made by hot stamping.

The third cross-member portion 330 may comprise a substantially U-shaped cross-section, comprising a first bottom wall 331 connecting a first front wall 332 and a first rear wall 333. The first front wall 332 may further comprise an outwardly extending flange 334 and the first rear wall 333 may further comprise an outwardly extending flange 335.

The rear rail assembly 10 may comprise a second cross-member 400 connecting the first rear rail 110 to the second rear rail 220.

As schematically shown in figure 2B, the first unitary rear rail structure 100 may comprise a first portion 140 of the second cross-member and the second unitary rear rail structure 200 may comprise a second portion 240 of the second cross-member. Accordingly, the first 140 and second 240 portions of the second cross-member may be connected to each other forming at least part of the second cross-member 400.

A fourth cross-member portion 440 may directly join the first portion 140 of the second cross-member to the second portion 240 of the second cross-member. In some examples, the portions may be welded together e.g. laser welding or resistance spot welding. In other examples, the portions may be mechanically attached to each other.

The technical features described with reference to the third cross-member portion may apply to the technical features of the fourth cross-member portion.

Figure 2B further shows that the rear rail assembly 10 may comprise a separately formed longitudinal bottom wall portion 160, 260. The longitudinal bottom wall portion 160, 260 may be joined to at least one of the rear rails. The longitudinal bottom wall portion 160, 260 may act as a reinforcement, improving crash performance of the rear rails.

The longitudinal bottom wall portion 160, 260 may be made by deforming one or more blanks. In some examples, the bottom wall portions 160, 260 may be made by hot stamping. For example, the bottom wall portions 160, 260 may be made in a direct hot stamping manufacturing process or in an indirect hot stamping manufacturing process. In other examples, the bottom wall portions 160, 260 may be manufactured by cold stamping or by other manufacturing process. Further details on the manufacturing process of the components have been described in relation to figure 2A.

The separately formed longitudinal bottom wall portion 160, 260 may comprise a substantially U-shaped cross-section, defined by a first sidewall 162, 262 and a second sidewall 163, 263 connected by a bottom wall 161, 261. The shape of the bottom wall portion 160, 260 may substantially match a shape of the front region 11 and/or the rear region 12 of the rear rails.

In some examples (not shown), a separately formed longitudinal bottom wall portion may be joined to a front region 11 of the first and/or second rear rails 110, 210 of the rear rail assembly 10, forming a first overlapping region. In some examples, the bottom wall of the separately formed longitudinal bottom wall portion 160, 260 may be joined to a front region 11 of the bottom wall 111, 211 of the first and/or second rear rails, and the first overlapping region may be formed.

In some examples, the separately formed longitudinal bottom wall portion 160, 260 may be joined to the rear region 12 of the first and/or second rear rails 110, 210 of the rear rail assembly 10, forming a second overlapping region. The bottom wall 161, 261 of the separately formed longitudinal bottom wall portion 160, 260 may be joined to a rear region 12 of the bottom wall 111, 211 of the first and/or second rear rails, and the second overlapping region may be formed.

Figure 2C shows a perspective view of another example of a rear rail assembly 10. In particular, figure 2C shows an exploded view of a rear rail assembly 10 comprising the first unitary rear rail structure 100 and the second unitary rear rail structure 200 obtained after deforming the first and second blanks 5, 9 shown in figure 2A according to another example of the present disclosure.

The first and second unitary rear rail structures 100, 200 differ from the unitary rear rail structures disclosed with reference to figure 2B in that the rear region 12 of the structures comprises a substantially L-shaped cross-section. The L-shaped cross-section is defined by a first inner wall 112, 212 connected to a first bottom wall 111, 211. The inner wall of the present example further comprises an inwardly extending flange 114.

Accordingly, in the present example the outer wall of the first and second rear rails 113, 213 may only extend along the front region 11 of the first and second rear rails 110, 210.

The separately formed longitudinal bottom wall portion 160, 260 may be joined to the rear region 12 of the rear rails forming a second overlapping region. In the present example, the bottom wall portion 160, 260 comprises a substantially U-shaped cross-section defined by a bottom wall 161, 261 connecting an inner wall 162, 262 and an outer wall 163, 263. In some examples, the outer wall 163, 263 may further comprise an outwardly extending flange.

Further, the rear region 12 of the rear rail assembly may comprise a U-shaped cross-section, at least formed by the first and/or second rear rail 110, 210 and the bottom wall portions 160, 260. The bottom wall 161, 261 of the longitudinal bottom wall portions 160, 260 may be joined to the bottom wall 111, 211 of the rear region 12 of the rear rails, forming the second overlapping region. In particular, the U-shaped cross-section may include the inner wall 112, 212 of the first and/or second rear rail, a bottom wall 161, 261 of the bottom wall portion 160, 260 and the outer wall 163, 263 of the bottom wall portion 160, 260.

Figure 2C also shows that the rear rail assembly 10 may comprise a separately formed external wall 170 which may be arranged to a rear region 12 of the assembly. The external wall 170, 270 may be joined to the outer wall 163, 263 of the bottom wall portion 160, 260. In this example, the rear rail assembly 10 may comprise a U-shaped cross-section including the inner wall 112, 212 of the first and/or second rear rails, a bottom wall 161, 261 of the bottom wall portion 160, 260, the outer wall 163, 263 of the bottom wall portion 160, 260 and the external wall 170, 270.

The external wall 170, 270 may allow to increase a height of the U-shaped cross-section, increasing energy absorption during a crash event e.g. during a rear crash. A U-shaped cross-section of the rear rail assembly may be obtained joining a plurality of deformed components, allowing for the components to be smaller in size and facilitating the obtention of components with complex shapes. The resistance and energy absorption of the first and/or second unitary rear rail structures may be upgraded according to specific needs.

The external wall 170, 270 may be obtained by deforming one or more blanks e.g. by cold stamping or by hot stamping.

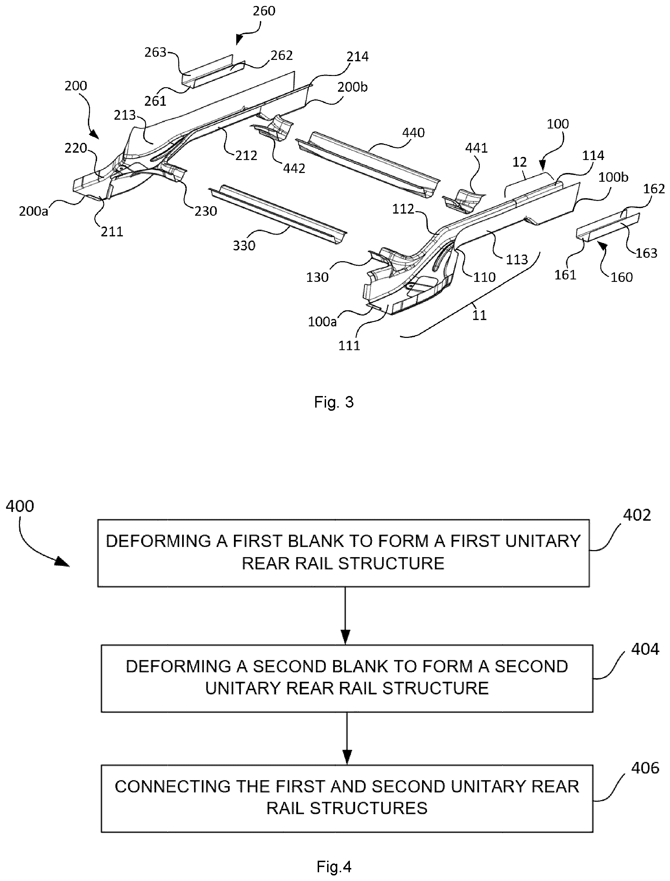

Figure 3 shows an exploded perspective view of a rear rail assembly 10 according to yet a further example of the present disclosure. The rear rail assembly 10 may comprise a first rear rail 110 and a second rear rail 210. The rear rails 110, 210 are connected by a first cross-member 300 and by a second cross-member 400.

The rear rail assembly 10 shown in figure 3 differs from the rear rail assembly 10 of figure 2B in that the first and second unitary rear rail structures 100, 200 only comprise a first portion of the first cross-member 130, 230 i.e. they are deformed such that the rear region 12 of the rear rails 110, 210 comprises a substantially U-shaped cross-section along its entire length.

The second cross-member 400 may comprise a fourth cross-member portion 440. The fourth cross-member portion 440 may be connected to the first and second rear rails 110, 120 using one or more brackets 441, 442.

The fourth cross-member portion 440 may be joined to one or more brackets 441, 442 and the brackets may be joined to the rear rails 110, 220 of the first and second unitary rear rail structures 100, 200. In the present example, two brackets 441, 442 connect the fourth cross-member portion 440 to a rear region 12 of the rear rails 110, 210. The brackets may be used to connect the rear rails with an additional cross-member in areas of the rear rails which are not formed such that they comprise a cross-member portion i.e. a corner of the cross-member.

The one or more brackets 441, 442 may comprise a substantially U-shaped cross-section and may be configured to be connected to the rear rails. The brackets may be joined to the bottom wall of the rear rails. In some examples, the brackets 441, 442 may be mechanically attached to the fourth cross-member portion 440 and/or to the rear rails. In other examples, the brackets may be joined to the fourth cross-member portion 440 and/or to the rear rails by welding.

Figure 4 shows a flow chart of a method 400 for manufacturing a rear rail assembly 10 for a vehicle framework. The rear rail assembly 10 comprises a first rear rail 110, a second rear rail 220 and at least a first cross-member 300 connecting the first rear rail 110 to the second rear rail 220.

The method 400 comprises, at block 402, providing a first blank to form a first unitary rear rail structure 100, wherein the first unitary rear rail structure 100 comprises the first rear rail 110 and a portion of the first cross-member 130.

The method 400 further comprises, at block 404, providing a second blank and deforming the second blank to form a second unitary rear rail structure 200, wherein the second unitary rear rail structure comprises the second rear rail 220 and a second portion 230 of the first cross-member.

The method 400 further comprises, at block 406, connecting the first unitary rear rail structure 100 to the second unitary rear rail structure 200.

Further, the method 400 may be adapted to form a rear rail assembly 10 for a vehicle framework with any combination of the technical features previously discussed.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method for manufacturing a rear rail assembly for a vehicle framework, the rear rail assembly comprising a first rear rail, a second rear rail and at least a first cross-member connecting the first rear rail to the second rear rail, wherein the method comprises:
providing a first blank and deforming the first blank to form a first unitary rear rail structure, wherein the first unitary rear rail structure comprises the first rear rail and a first portion of the first cross-member;
providing a second blank and deforming the second blank to form a second unitary rear rail structure, wherein the second unitary rear rail structure comprises the second rear rail and a second portion of the first cross-member; and
connecting the first unitary rear rail structure to the second unitary rear rail structure.

2. The method of claim 1, wherein connecting the first and second unitary rear rail structure comprises joining a third cross-member portion to the first and second portions of the first cross-member.

3. The method of claim 1, wherein connecting the first and second unitary rear rail structure comprises directly joining the first and second portions of the first cross-member.

4. The method of any of claims 1 - 3, wherein providing the first blank comprises providing a plurality of first sub-blanks, and joining the first sub-blanks to form the first blank and providing the second blank comprises providing a plurality of second sub-blanks and joining the second sub-blanks to form the second blank.

5. The method of claim 4, wherein joining the first sub-blanks comprises welding the blanks to each other.

6. The method of claim 5, wherein welding the blanks comprises resistance spot welding and/or laser welding.

7. The method of any of claims 4 - 6, wherein joining the first sub-blanks to form the first blank comprises partially overlapping the first sub-blanks.

8. The method of any of claims 4 - 7, wherein one of the first sub-blanks is a first patch blank completely overlapping with one of the other first sub-blanks.

9. The method of any of claims 4 - 6, wherein joining the first sub-blanks to form the first blank comprises edge-to-edge welding the first sub-blanks.

10. The method of any of claims 4 - 9, wherein a rear region of the first blank is made from a more ductile material than a front region of the first blank.

11. The method of any of claims 1 - 10, wherein deforming the first and second blanks comprises hot-stamping.

12. The method of any of claims 1 - 11, wherein the rear rail assembly comprises a second cross-member connecting the first rear rail to the second rear rail.

13. The method of claim 12, further comprising connecting the first and second unitary rear rail structures with a fourth cross-member portion to form at least part of the second cross-member.

14. The method of claim 13, comprising joining the fourth cross-member portion to one or more brackets and joining the brackets to the rear rails of the first and second unitary rear rail structures.

15. The method of claim 13, wherein the first unitary rear rail structure comprises a first portion of the second cross-member and the second unitary rear rail structure comprises a second portion of the second cross-member.
